# EUROPÄISCHE PATENTANMELDUNG

(11) **EP 1 170 326 A1**
(43) Veröffentlichungstag der Anmeldung: **09.01.2002**
(21) Anmeldenummer: 01114525.7
(22) Anmeldetag: 16.06.2001
(51) Int. Cl.: C08J 11/08, B29B 17/00, G01N 33/44

(54) **Verfahren zur Bestimmung des Anteils von HDPE und LDPE in Polyolefingemischen**

(30) Priorität: 06.07.2000 DE 10032918
(71) Anmelder: Siemens Axiva GmbH & Co. KG, 65926 Frankfurt am Main (DE)
(72) Erfinder: Bungert, Bernd, Dr.-Ing., 65719 Hofheim (DE); Daiminger, Ulrich, Dr., 80798 München (DE)

(57) **Zusammenfassung**

Die Erfindung betrifft ein Verfahren zur quantitativen Bestimmung von LDPE in Mischungen, die LDPE und HDPE enthalten, dadurch gekennzeichnet, daß man mit einem Lösemittel, das ein aliphatisches Alkan oder einen Ester enthält und das einen Siedepunkt aus dem Bereich von 60 bis 100°C bei 1013 mbar hat, selektiv LDPE löst, die Lösung anschließend abtrennt, das Lösemittel aus der abgetrennten Lösung entfernt und den Anteil LDPE gravimetrisch bestimmt.

## Beschreibung

Die Erfindung betrifft ein Verfahren zur quantitativen Bestimmung von LDPE in Mischungen, die LDPE und HDPE enthalten.

Beim stofflichen Recycling von Kunststoffen, ergibt sich häufig das Problem, daß diese Kunststoffe nicht sortenrein anfallen. Besonders gravierend ist dieser Umstand bei Polyethylen, da selbst reine Polyethylen-Fraktionen oft ein Gemisch von verschiedenen Typen sind. Diese Typen unterscheiden sich in der chemischen Struktur und den Gebrauchseigenschaften. Besonders verbreitete Typen sind dabei HDPE (**H**igh **D**ensity **P**oly**e**thylene) und LDPE (**L**ow **D**ensity **P**oly**e**thylene). Da beide Typen sich physikalisch und chemisch nur wenig unterscheiden ist eine genaue und schnelle Analytik erforderlich, um eine entsprechende direkte Wiederverwertung bzw. weitere Auftrennung zu ermöglichen.

Es ist bekannt, daß sich mit Hilfe von Lösemitteln Polymere fraktionieren lassen. Die Fraktionierung kann, in Abhängigkeit von den genauen Versuchsbedingungen nach Molmasse und Kristallinität bzw. Verzweigungsgrad erfolgen.

Die bekannteste Methode, auch für Polyethylen, ist dabei das TREF-(**T**emperature **R**ising **E**lution **F**ractionation)-Verfahren, wie z. B. von Wild, L. und Ryle, T (Crystallizability Distributions in Polymers: A New Analytical Technique. In [J. Polym. Sci: Polym. Phys. Ed. 20 (1982) 441-445]) beschrieben. Nachteilig an diesen Verfahren ist der hohe apparative und zeitliche Aufwand, wenn nur eine Unterscheidung zwischen LDPE und HDPE erforderlich ist.

Das analytische Verfahren das Watkins et al. (Fractionation of High Density Polyethylene in Propane by Isothermal Pressure Profiling and Isobaric Profiling. In: The Journal of Supercritical Fluids, 1991, 4, 24-31) vorschlagen, zeigt eine noch größere Komplexität.

Auch LIBS-Verfahren (**L**aser **I**nduced **B**reakdown **S**pectroscopy), wie von Sattmann et al. (Laser-Induced Breakdown Spectroscopy for Polymer Identification. In Applied Spectroscopy, 1998, 52, S. 456-461) zeichnen sich durch einen erheblichen apparativen Aufwand aus.

Zur technischen, wie auch zur analytischen Trennung von Polymeren eignet sich prinzipiell auch die Methode von Naumann und Lynch (E. B. Naumann, J.C. Lynch: Polymer Recycling by Selective Dissolution, WO 91/03515). Dabei werden durch kontrollierte Temperatureinstellung einzelne Polymere selektiv aus einem Gemisch gelöst. Nachteil dieses Verfahrens ist die Notwendigkeit der exakten Temperaturführung, um das Zielpolymer selektiv zu lösen. Daraus ergeben sich erhebliche Anforderungen an die technische Umsetzung. Hinzu kommt, daß die Lösekraft der vorgeschlagenen Lösemittel so hoch ist, daß ein selektives Lösen von LDPE, HDPE und PP praktisch nicht erfolgen kann, sondern vielmehr mindestens zwei der genannten Polymere gemeinsam gelöst werden. Aus den genannten Gründen ist eine Trennung der genannten Polymere entweder nicht möglich oder sehr zeitaufwendig.

Eine analytische Unterscheidung von LDPE und PP oder HDPE und PP ist mittels DSC (Differential Scanning Calorimetry) möglich. Eine analytische Trennung von LDPE und HDPE ist aufgrund der Überlappung der Schmelzbereiche nicht möglich.

Damit ergibt sich, daß zur Zeit keine einfache Methode existiert, mit deren Hilfe es möglich ist einfach, schnell und ohne großen apparativen Aufwand eine analytische Bestimmung des Anteils von LDPE und HDPE in Gemischen durchzuführen.

Der Erfindung lag daher die Aufgabe zugrunde, ein einfaches und schnelles Verfahren zur Bestimmung des LDPE-Anteils bereitzustellen.

Es wurde nun überraschend gefunden, daß diese Aufgabe dadurch gelöst werden kann, daß man mit einem Lösemittel, das ein aliphatisches Alkan oder einen Ester enthält und das einen Siedepunkt aus dem Bereich von 60 bis 100°C bei 1013 mbar hat, selektiv LDPE löst, die Lösung anschließend abtrennt, das Lösemittel aus der abgetrennten Lösung entfernt und den Anteil LDPE gravimetrisch bestimmt.

Gegenstand der Erfindung ist daher ein Verfahren zur quantitativen Bestimmung von LDPE in Mischungen, die LDPE und HDPE enthalten, dadurch gekennzeichnet, daß man mit einem Lösemittel, das ein aliphatisches Alkan oder einen Ester enthält und das einen Siedepunkt aus dem Bereich von 60 bis 100°C bei 1013 mbar hat, selektiv LDPE löst, die Lösung anschließend abtrennt, das Lösemittel aus der abgetrennten Lösung entfernt und den Anteil LDPE gravimetrisch bestimmt.

Besondere Ausführungsformen sind in den Unteransprüchen offenbart.

In einer besonderen Ausführungsform des erfindungsgemäßen Analyseverfahrens kann mit einem aliphatischen Lösemittel oder Lösemittelgemisch, mit einem Siedebereich von 80 - 95°C (bei 1013 mbar), beispielsweise durch Fest/Flüssig-Extraktion bei Siedetemperatur der LDPE-Anteil des Gemischs selektiv gelöst werden.

Weiter wurde überraschend gefunden, daß durch Wahl eines Lösemittels mit einem Siedepunkt zwischen den Lösetemperaturen von LDPE und HDPE durch Extraktion unter Siedebedingungen des Lösemittels die Trennschärfe sehr exakt eingestellt werden kann. Durch geeignete apparative Maßnahmen kann die Temperatur zum selektiven Lösen praktisch beliebig genau eingestellt werden. Damit ergibt sich eine sehr einfache Methode, um die erforderliche exakte Temperaturführung zu gewährleisten.

Die Fest/Flüssig-Extraktion kann dazu in einem Behälter, üblicherweise einem Rührkolben, bevorzugt unter Rührung und/oder unter Rückfluß oder in einer Soxhlet-Apparatur durchgeführt werden. Die Entfernung des Lösemittels erfolgt vorzugsweise durch Trocknung und/oder Eindampfung. Bei Extraktion im Rührkolben ist eine anschließende Heißfiltration, vorzugsweise über ein Faltenfilter oder eine beheizte Nutsche, vorteilhaft, um nicht-LDPE-Anteile aus der Lösung zu entfernen. Bei Verwendung eines Soxhlets wird die Polymerprobe in einem Gitterkorb ohne zusätzliche Papierhülse in die Soxhlet-Apparatur eingebracht. Nach Filtration und Trocknung des Retentats bzw. Raffinats (→ HDPE und Restpolymere), sowie Eindampfung und Trocknung des Filtrats bzw. Extrakts (→ LDPE) können dann die relativen Anteile an HDPE sowie an Restpolymeren sowie LDPE und der Gesamtmassefehler durch Wägung bestimmt werden. Der Anteil von HDPE im Restpolymer kann durch DSC nach Entfernen von LDPE nunmehr einfach durchgeführt werden.

Das bevorzugt verwendete Lösemittel ist Ligroin, Leichtbenzin (Fluka, purum; Fluka-Nr. 61790), mit einem Siedebereich von 80 - 95°C.

Im folgenden wird die Erfindung anhand von Ausführungsbeispielen näher erläutert. Eine Beschränkung in irgend einer Weise ist dadurch nicht beabsichtigt.

Alle verwendeten Teile sind chemische Standardapparturen, das Lösemittel wird durch Destillation zurückgewonnen und die Extraktion läuft in weniger als 3 Stunden ab. Damit ist das Ziel einer einfachen und schnellen HDPE/LDPE-Analytik erreicht.

### Rührkessel/Filtration

5 g Probe wurden mit 200 ml Ligroin unter Rückfuß und ständigem Rühren für 3 h zum Sieden erhitzt. Nach Heißfiltration über ein Faltenfilter wurde das Filtrat am Rotationsverdampfer bis zur Trockene eingeengt und der erhaltene Rückstand (LDPE) gemeinsam mit dem Filterrückstand (HDPE) bis zur Gewichtskonstanz im Vakuumtrockenschrank getrocknet und ausgewogen.

Zur Überprüfung der Leistungsfähigkeit der Methode wurden Standards mit bekannter Konzentration als Probe eingesetzt.

### Tabelle 1 zeigt die gefunden Ergebnisse.

**Tabelle 1:**

| LDPE-Wiederfindung nach Extraktion im Rührkessel | | | | |
|---|---|---|---|---|
| Nr. | HDPE/LDPE in der Probe | Einwaage | Wiedergefundenes LDPE* | |
| | [%] | [g] | [g] | [%]** |
| 1. | 50/50 | 5,22 | 2,48 (2,6) | 47,5 (50) |
| 2. | 10/90 | 4,88 | 4,50 (4,4) | 92,2 (90) |

| | | | | |
|---|---|---|---|---|
| * in Klammern jeweils Erwartungswert; | | | | |
| ** bezogen auf die Einwaage | | | | |

### Soxhlet-Extraktor

In einem Soxhlet-Extraktor der Fa. Büchi (Büchi Labortechnik, Konstanz, Deutschland, Büchi Extraction System B-811) wurden mit dem Programm "Warmextraktion" (Das ist eine Einstellung des genannten - programmierbaren - Extraktionssystems) 2 g Probe mit ca. 100 ml Ligroin für 1 h extrahiert. Die Probe wurde dazu in einem Drahtkorb mit den Abmessungen: Länge = 95 mm; Durchmesser = 35 mm; Maschenweite = 0.5 mm in die Apparatur eingebracht. Extrakt und Raffinat wurden nach Versuchsende bis zur Gewichtskonstanz im Vakuumtrockenschrank getrocknet und ausgewogen.

Zur Überprüfung der Leistungsfähigkeit der Methode wurden Standards mit bekannter Konzentration als Probe eingesetzt.

### Tabelle 2 zeigt die gefunden Ergebnisse.

**Tabelle 2:**

| LDPE-Wiederfindung nach Extraktion im Soxhlet | | | | |
|---|---|---|---|---|
| Nr. | HDPE/LDPE in der Probe | Einwaage | Wiedergefundenes LDPE* | |
| | [%] | [9] | [g] | [%]** |
| 3. | 90/10 | 1,70 | 0,17 (0,17) | 10,0 (10) |
| 4. | 90/10 | 1,35 | 0,13 (0,14) | 9,6 (10) |
| 5. | 90/10 | 1,41 | 0,14 (0,14) | 9,9 (10) |
| 6. | 90/10 | 1,18 | 0,12 (0,12) | 10,2 (10) |

| | | | | |
|---|---|---|---|---|
| * in Klammern jeweils Erwartungswert; | | | | |
| ** bezogen auf die Einwaage | | | | |

### Trennung eines Gemisches aus LDPE, HDPE und PP

In einem Soxhlet-Extraktor der Fa. Büchi (Büchi Extraction System B-811) wurden mit dem Programm "Warmextraktion" 2 g Probe mit ca. 100 ml Ligroin für 1 h extrahiert. Die Probe wurde dazu in einem Drahtkorb mit den Abmessungen: Länge = 95 mm; Durchmesser = 35 mm; Maschenweite = 0.5 mm in die Apparatur eingebracht. Extrakt und Raffinat wurden nach Versuchsende bis zur Gewichtskonstanz im Vakuumtrockenschrank getrocknet und ausgewogen. Zur weiteren Analyse wurde das Raffinat mittels DSC untersucht.

Zur Überprüfung der Leistungsfähigkeit der Methode wurden Standards mit bekannter Konzentration an LDPE, HDPE und PP als Probe eingesetzt. Die Methode liefert eine Wiederfindung aller eingewogenen Komponenten mit einer Genauigkeit von unter 10 Gew.-% Abweichung von der Einwaage.

### Zusammenfassend kann folgendes festgehalten werden:

Das erfindungsgemäße Verfahren ist geeignet die quantitative Zusammensetzung von HDPE und LDPE in Gemischen mit oder ohne Anwesenheit weiterer Polymere sowie nichtlöslicher organischer oder anorganischer Bestandteile einfach und schnell zu bestimmen. Dazu wird selektiv LDPE mit einem Lösemittel in der Siedehitze aus der Probe gelöst und gravimetrisch bestimmt. Das Extrakt oder das Raffinat oder Raffinat und Extrakt werden gegebenenfalls weiteren Analysemethoden unterzogen. Die Analysen können entweder in einem gerührten Kolben oder in einer Soxhlet-Apparatur durchgeführt werden. Die Ergebnisse zeigen, daß mit guter Genauigkeit in einem breiten Konzentrationsbereich die LDPE- und HDPE-Konzentration bestimmt werden können.

Der Bedarf nach schnellen Analysen ergibt sich aus dem zunehmenden stofflichen Recycling von Kunststoffen.

## Patentansprüche

1. Verfahren zur quantitativen Bestimmung von LDPE in Mischungen, die LDPE und HDPE enthalten, **dadurch gekennzeichnet, daß** man mit einem Lösemittel, das ein aliphatisches Alkan oder einen Ester enthält und das einen Siedepunkt aus dem Bereich von 60 bis 100°C bei 1013 mbar hat, selektiv LDPE löst, die Lösung anschließend abtrennt, das Lösemittel aus der abgetrennten Lösung entfernt und den Anteil LDPE gravimetrisch bestimmt.

2. Verfahren nach Anspruch 1, wobei das Lösemittel aus der Gruppe der verzweigten oder unverzweigten oder cyclischen Alkane oder aus der Gruppe der verzweigten oder unverzweigten oder teilweise cyclischen Ester oder aus deren Gemischen gewählt ist.

3. Verfahren nach Anspruch 1 oder 2, wobei das Lösemittel ein Gemisch aus aliphatischen Alkanen ist, mit einem Siedebereich zwischen 60 - 100°C (1013 mbar), bevorzugt zwischen 80 und 95°C.

4. Verfahren nach einem oder mehreren der vorstehenden Ansprüche, wobei das Lösungsmittel einen Siedepunkt zwischen 70 und 85°C hat.

5. Verfahren nach einem oder mehreren der vorstehenden Ansprüche, wobei die Selektivität des eingesetzten Lösemittels durch Wahl eines geeigneten Verzweigungsgrads erhöht ist.

6. Verfahren nach einem oder mehreren der vorstehenden Ansprüche, wobei das Lösemittelgemisch Ligroin (Leichtbenzin) ist.

7. Verfahren nach einem oder mehreren der vorstehenden Ansprüche, wobei die selektive Lösung des LDPE in einem gerührtem Kolben beim Sieden unter Rückfluß stattfindet und die weitere Aufarbeitung und Trennung durch Heißfiltration erfolgt, bevorzugt über ein Faltenfilter oder eine Nutsche.

8. Verfahren nach einem oder mehreren der Ansprüche 1 bis 6, wobei die selektive Lösung des LDPE in einer Soxhlet-Apparatur durchgeführt wird.

9. Verfahren nach Anspruch 8, wobei die Probe in einem Gewebekorb ohne Papierhülse in den Soxhlet eingebracht wird, wobei der Gewebekorb eine Maschenweite aus dem Bereich von 0,1 bis 1 mm aufweist, bevorzugt 0,5 mm.

10. Verfahren nach einem oder mehreren der vorstehenden Ansprüche, wobei weitere Polymere im zu analysierenden Gemisch vorhanden sind und die weiteren Polymere entweder nicht gelöst oder gelöst werden und der Anteil von LDPE und HDPE in Raffinat oder Extrakt durch weitere, nachfolgende Analysemethoden bestimmt werden.

11. Verfahren nach Anspruch 10, wobei es sich bei den weiteren Polymeren um eines oder mehrere Polymere aus der Gruppe Polyvinylchlorid, Polyethylenterephthalat, Polystyrol oder Polypropylen oder deren Gemische handelt.

12. Verfahren nach einem oder mehreren der vorstehenden Ansprüche, wobei zusätzlich nichtlösliche organische oder anorganische Bestandteile in dem zu trennenden Gemisch vorhanden sind.
